# EUROPEAN PATENT APPLICATION

(11) **EP 4 340 100 A1**
(43) Date of publication of application: **20.03.2024**
(21) Application number: 23197581.4
(22) Date of filing: 15.09.2023
(51) Int. Cl.: H01M 50/184, H01M 50/178, H01M 50/186, H01M 50/342

(54) **ELECTROCHEMICAL APPARATUS AND ELECTRONIC DEVICE**

(30) Priority: 15.09.2022 CN 202211122674
(71) Applicant: Ningde Amperex Technology Ltd., Ningde City, Fujian 352100 (CN)
(72) Inventor: YAN, Ning, Ningde City, Fujian 352100 (CN); LIU, Kai, Ningde City, Fujian 352100 (CN)
(74) Representative: Icosa

(57) **Abstract**

An electrochemical apparatus including an accommodating member, an electrode assembly, a metal strip, and a sealing colloid. The accommodating member encloses an accommodating cavity (11) for accommodating the electrode assembly (20). The metal strip (30) has a first part (21) extending out of the accommodating member, a second part (32) provided with the sealing colloid (40), and a third part (33) located inside the accommodating cavity (11) and electrically connected to the electrode assembly (20). The sealing colloid (40) includes a sealed portion (41) connected between the accommodating member and the second part, along with the accommodating member forming a sealing portion of the electrochemical apparatus (100); and an inner unsealed portion (42) provided in the accommodating cavity (11). The inner unsealed portion (42) is provided with at least one first groove (421) and at least one second groove (4221), and the second groove (4221) is in communication with the accommodating cavity (11).

## Description

### TECHNICAL FIELD

This application relates to the field of electrochemical apparatus technologies, and in particular, to an electrochemical apparatus and an electronic device.

### BACKGROUND

Lithium-ion batteries (an electrochemical apparatus) are usually divided into hard case batteries and soft pack batteries. Compared with hard case batteries, soft pack batteries have a benefit of higher energy density because the soft pack batteries have a thin shell and their shapes can be customized.

In a soft pack battery, typically a tab colloid and a package bag on a tab are hot pressed to implement sealing of a tab-side package bag. In a hot pressing procedure, under an effect of high temperature and pressure, the tab colloid melts and the molten tab colloid flows around. Part of the tab colloid flowing out of the package bag solidifies and forms irregular shaped overflow of colloid. During production, if a sealing edge of the soft pack battery is folded or the soft pack battery drops during use, the overflow of the colloid can cause compression on a bare cell inside the package bag and even puncture an electrode plate and a separator of the bare cell, which is likely to cause safety risks.

### SUMMARY

This application is intended to provide an electrochemical apparatus and an electronic device, to improve a problem that interference is caused by an overflow of a sealing colloid on a bare cell in a package bag and improve safety of the electrochemical apparatus.

According to a first aspect of this application, an electrochemical apparatus is provided, including an accommodating member and an electrode assembly. The accommodating member encloses an accommodating cavity for accommodating the electrode assembly, and the electrochemical apparatus further includes a metal strip and a sealing colloid. The metal strip has a first part, a second part, and a third part connected in sequence. The first part extends out of the accommodating member, and the second part is provided with the sealing colloid. The third part is located inside the accommodating cavity and electrically connected to the electrode assembly. The sealing colloid includes a sealed portion and an inner unsealed portion connected to each other. The sealed portion is connected between the accommodating member and the second part, and the sealed portion and the accommodating member form a sealing portion of the electrochemical apparatus. The inner unsealed portion is provided in the accommodating cavity, at least one surface of the inner unsealed portion is provided with at least one first groove and at least one second groove, and the second groove is in communication with the accommodating cavity.

In an embodiment of this application, at least one first groove is provided on at least one surface of the inner unsealed portion in the sealing colloid, so that when hot pressing is performed on the accommodating member and the sealing colloid to seal an extending edge of the metal strip in the electrochemical apparatus (that is, when the sealing portion is formed), a molten sealing colloid flowing towards the accommodating cavity in the hot pressing process is accommodated in the first groove. In this way, an overflow of the sealing colloid formed in the accommodating cavity can be effectively reduced, thereby alleviating a safety risk caused by interference of the overflow of the sealing colloid on the electrode assembly. In addition, the second groove is in communication with the accommodating cavity. When a hot-box test is performed on the electrochemical apparatus or thermal runaway occurs, the gas being heated in the accommodating cavity expands. Some of the gas converges in the second groove and impacts the sealing portion in a concentrated manner in the second groove, so that the sealing portion can be flushed away and the gas in the accommodating cavity can be discharged, thereby preventing explosion of the electrochemical apparatus.

According to some embodiments of this application, the inner unsealed portion further includes an inner exposed portion. The inner exposed portion is located at one end of the inner unsealed portion facing away from the sealing portion. The second groove is provided on the inner exposed portion. The second groove extends in a direction towards the sealing portion. Because the second groove extends in the direction towards the sealed portion, when the hot-box test is performed on the electrochemical apparatus or the thermal runaway occurs, the gas converged in the second groove makes an impact directly in the direction towards the sealed portion, so that the gas impacts the sealed portion more intensively and the sealing portion of the electrochemical apparatus can be flushed away.

The gas being heated in the accommodating cavity expands. Some of the gas converges in the second groove and impacts the sealing portion in a concentrated manner in the second groove, so that the sealing portion can be flushed away and the gas in the accommodating cavity can be discharged, thereby preventing explosion of the electrochemical apparatus.

According to some embodiments of this application, in a direction from the inner exposed portion to the sealed portion, the second groove includes a first section and a second section in communication with each other. A cross-sectional area of the first section is greater than that of the second section, thereby helping more gas enter the second groove through the first section. In addition, the cross-sectional area of the second section is small, so that the gas has a greater pressure when collectively impacting the second section, thereby helping the gas flush away the sealing portion.

According to some embodiments of this application, the inner unsealed portion includes a first wall surface, a second wall surface, a third wall surface, a first chamfer portion, and a second chamfer portion. In a direction from the sealed portion to the inner unsealed portion, the first wall surface faces the accommodating cavity. In the first direction, the second wall surface and the third wall surface are respectively provided at two ends of the first wall surface. The first direction is perpendicular to the direction from the sealed portion to the inner unsealed portion, and the first direction is perpendicular to a thickness direction of the metal strip. The first chamfer portion is provided at the connection between the first wall surface and the second wall surface, and an outer surface of the first chamfer portion is an arc surface. The second chamfer portion is provided at the connection between the first wall surface and the third wall surface, and an outer surface of the second chamfer portion is an arc surface. Because the outer surfaces of the first chamfer portion and the second chamfer portion are both arc surfaces, the arc surfaces come into contact with the electrode assembly in a smoother manner and are unlikely to puncture the electrode assembly, which can effectively alleviate interference between the first chamfer portion and the electrode assembly and between the second chamfer portion and the electrode assembly.

According to some embodiments of this application, in the first direction, the first wall surface includes several first sub wall surfaces provided in sequence, and the second groove is provided between two adjacent first sub wall surfaces. The inner unsealed portion further includes a third chamfer portion, the third chamfer portion is provided at the connection between an inner wall of the second groove and the first sub wall surface, and an outer surface of the third chamfer portion is an arc surface. In this way, interference between the third chamfer portion and the electrode assembly may be reduced, reducing the risk of the electrode assembly being punctured.

According to some embodiments of this application, the sealing colloid further includes an outer unsealed portion. The outer unsealed portion is connected to one end of the sealed portion facing away from the inner unsealed portion. The outer unsealed portion at least partially extends out of the accommodating member, to ensure sealing of the connection between the sealing colloid and the accommodating member.

According to some embodiments of this application, the sealed portion is integrally formed with the inner unsealed portion. The sealing colloid is integrally formed so that the sealing colloid has sufficient strength to stably connect the metal strip and the accommodating member.

According to some embodiments of this application, the first groove satisfies at least one of the following conditions:
(a) on a surface of the inner unsealed portion, an area of the first groove is 10% to 80% of a surface area of the inner unsealed portion; where when the area ratio is 10% to 80%, a sealing colloid in a molten state can be effectively collected; and
(b) a maximum depth of the first groove is 1/4 to 1/3 of a thickness of the sealing colloid; where at this depth, the first groove can effectively collect enough sealing colloid in a molten state and ensure that the sealing colloid has sufficient strength.

According to some embodiments of this application, the sealing colloid fits around the metal strip, and the sealing colloid is connected between the metal strip and the accommodating member. The inner unsealed portion includes a first inner unsealed portion and a second inner unsealed portion, and in a thickness direction of the metal strip, the first inner unsealed portion is provided opposite the second inner unsealed portion. The first inner unsealed portion is provided with at least one first groove, and/or the second inner unsealed portion is provided with at least one first groove. Both the first inner unsealed portion and the second inner unsealed portion may be provided with the first groove to collect more sealing colloids in a molten state from a plurality of positions, thereby further reducing a corner formed by the overflow of the sealing colloids in a molten state being solidified after leakage.

According to some embodiments of this application, the inner exposed portion includes a first inner exposed portion and a second inner exposed portion, and in the thickness direction of the metal strip, the first inner exposed portion is provided opposite the second exposed portion. The first inner exposed portion is provided with at least one second groove, and/or the second inner exposed portion is provided with at least one second groove. Both the first inner exposed portion and the second inner exposed portion may be provided with the second groove to help the gas accommodated in the accommodating cavity impact the sealing portion from a plurality of positions, thereby reducing the risk of explosion in the electrochemical apparatus.

According to some embodiments of this application and a second aspect, this application further provides an electronic device, including the electrochemical apparatus according to any embodiment in the first aspect of this application.

The above descriptions are merely an overview of the technical solutions of this application. To understand technical means of this application more clearly, the technical means may be implemented in accordance with contents of this specification. To make the above and other purposes, features, and advantages of this application more comprehensible, the following implementations of this application are specifically given as examples.

### BRIEF DESCRIPTION OF DRAWINGS

To describe the technical solutions of the embodiments of this application more clearly, the following briefly describes the accompanying drawings required for describing the embodiments of this application. Apparently, the accompanying drawings in the following descriptions show merely some embodiments of this application, and persons of ordinary skill in the art may still derive other drawings from the accompanying drawings.
FIG. 1 is a schematic diagram depicting a structure of an electrochemical apparatus according to some embodiments of this application;
FIG. 2 is a schematic diagram depicting a structure of an electrode assembly according to some embodiments of this application;
FIG. 3 is a schematic diagram depicting a structure of a metal strip according to some embodiments of this application;
FIG. 4 is a schematic diagram of connection between a metal strip and a sealing colloid according to some embodiments of this application;
FIG. 5 is a schematic diagram of connection between a metal strip and a sealing colloid according to some embodiments of this application;
FIG. 6 is a side view of a metal strip and a sealing colloid after being connected according to some embodiments of this application;
FIG. 7 is a schematic diagram of connection between a metal strip and a sealing colloid according to some embodiments of this application;
FIG. 8 is a diagram of FIG. 7 locally enlarged at A;
FIG. 9 is a schematic diagram of connection between a metal strip and a sealing colloid according to some embodiments of this application; and
FIG. 10 is a schematic diagram of connection between a metal strip and a sealing colloid according to some embodiments of this application.

Reference signs are described as follows:
100. electrochemical apparatus;
10. accommodating member; 11. accommodating cavity;
20. electrode assembly; 21. first electrode plate; 22. second electrode plate; 23. separator;
30. metal strip; 31. first part; 32. second part; 33. third part;
40. sealing colloid;
41. sealed portion;
42. inner unsealed portion; 42a. first wall surface; 42a1. first sub wall surface; 42b. second wall surface; 42c. third wall surface; 42d. front end face; 421. first groove; 421a. bottom of a first groove; 422. inner exposed portion; 4221. second groove; 4221a. first section; 4221b. second section; 423. upper half section; 424. first chamfer portion; 425. second chamfer portion; 426. third chamfer portion; 427. first inner unsealed portion; 428. second inner unsealed portion;
43. outer unsealed portion; and 431. outer exposed portion.

### DETAILED DESCRIPTION OF EMBODIMENTS

For ease of understanding this application, the following makes a more detailed description of this application with reference to the accompanying drawings and specific embodiments. It should be noted that when an element is referred to as being "fixed to" another element, it may be directly on the another element, or there may be one or more in-between elements. When an element is deemed as being "connected to" another element, it may be directly connected to the another element, or there may be one or more in-between elements. The terms "top", "bottom", "left", "right", and other similar expressions as used in this specification are for illustration only.

Unless otherwise defined, all technical and scientific terms used in this specification have the same meanings as those usually understood by a person skilled in the art of this application. The terms used in this specification of this application are merely for the purpose of describing specific embodiments, and are not intended to limit this application. The term "and/or" used in this specification includes any and all combinations of one or more related listed items.

In addition, technical features in different embodiments of this application described below can be combined with each other provided that they do not conflict with each other.

In this specification, the term "installation" includes fixing or restricting a certain component or an apparatus at a specific position or place by welding, screw connection, clamping, bonding, and the like. The component or the apparatus can remain stationary in the specific position or place or move within a limited range. The component or the apparatus can be disassembled or cannot be disassembled after being fixed or restricted at the specific position or place, which is not limited in the embodiments of this application.

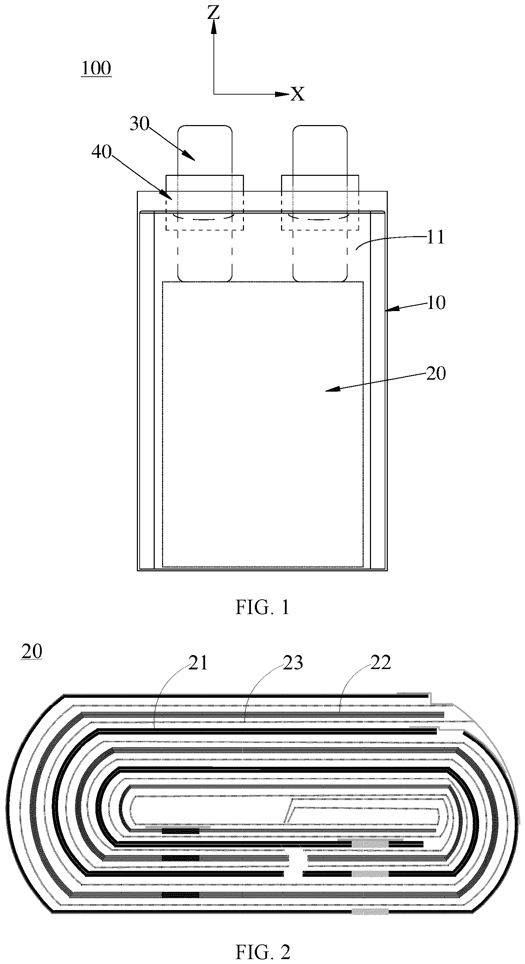

According to a first aspect, an embodiment of this application proposes an electrochemical apparatus 100. Referring to FIG. 1, the electrochemical apparatus 100 includes an accommodating member 10, an electrode assembly 20, a metal strip 30, and a sealing colloid 40. The electrode assembly 20 is accommodated in the accommodating member 10. One end of the metal strip 30 is connected to the electrode assembly 20 in the accommodating member 10 while the other end extends out of the accommodating member 10. The sealing colloid 40 is used to connect the accommodating member 10 and the metal strip 30. It should be noted that in the embodiments of the application, the electrochemical apparatus 100 is the smallest unit constituting a battery or a battery module and is a place specifically implementing the conversion between electric energy and chemical energy.

For the foregoing accommodating member 10, referring to FIG. 1, an outline of the accommodating member 10 may be in a shape of a flat cuboid, and the inside of the accommodating member 10 encloses an accommodating cavity 11. The accommodating cavity 11 is used to accommodate the electrode assembly 20 and an electrolyte (not shown in the figure). The electrolyte infiltrates the electrode assembly 20 in the accommodating cavity 11.

For the foregoing electrode assembly 20, referring to FIG. 1 and FIG. 2, the electrode assembly 20 is accommodated in the accommodating cavity 11 of the accommodating member 10. The electrode assembly 20 includes a first electrode plate 21, a second electrode plate 22, and a separator 23. Polarities of the first electrode plate 21 and the second electrode plate 22 are opposite, and the separator 23 is disposed between the first electrode plate 21 and the second electrode plate 22, so that the first electrode plate 21 and the second electrode plate 22 are separated. The electrode assembly 20 may have a wound structure. That is, the first electrode plate 21, the separator 23, and the second electrode plate 22 are stacked and wound to form the electrode assembly 20, so that the electrode assembly is accommodated in the foregoing accommodating cavity 11. In other embodiments, the electrode assembly 20 may alternatively have a stacked structure.

For the foregoing metal strip 30, referring to FIG. 1 and FIG. 2, one end of the metal strip 30 is disposed in the accommodating cavity 11 and electrically connected to the electrode assembly 20 while the other end extends out of the accommodating member 10. Two metal strips 30 may be disposed. One of the metal strips 30 is connected to the first electrode plate 21 of electrode assembly 20, and the other one is connected to the second electrode plate 22 of electrode assembly 20 to lead out a positive electrode and a negative electrode of the electrode assembly 20. The metal strip 30 may be made of either Al or Ni material. For example, one metal strip 30 is made of the Al material and connected to the first electrode plate 21, and the other metal strip 30 is made of the Ni material and connected to the second electrode plate 22.

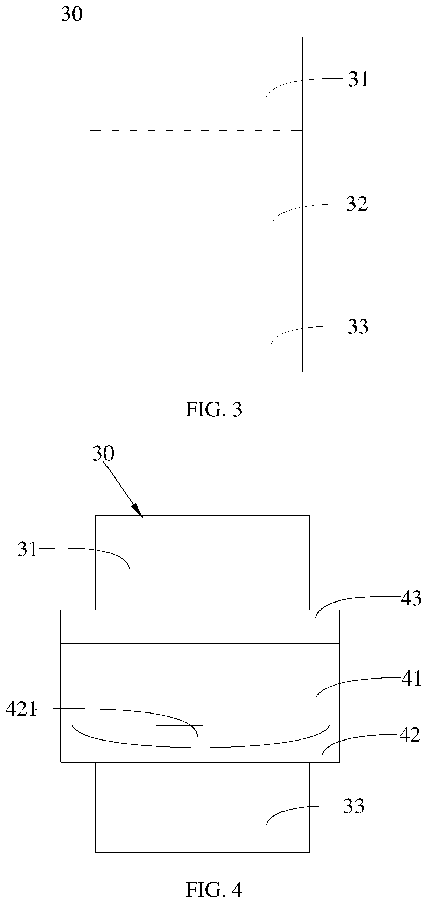

One metal strip 30 is used as an example. Referring to FIG. 1 and FIG. 3, the metal strip 30 includes the first part 31, the second part 32, and the third part 33 connected in sequence. The first part 31 extends out of the accommodating member 10 and is configured to be in communication with an external circuit. The second part 32 is connected to the accommodating member 10 by using the foregoing sealing colloid 40. For example, the accommodating member 10 is provided with a through hole (not shown in the figure), the first part 31 extends from the through hole, and the second part 32 is located inside the through hole. In addition, the second part 32 is connected to an inner wall of the through hole by using the sealing colloid 40. Alternatively, the accommodating member 10 includes a first housing (not shown in the figure) and a second housing (not shown in the figure). The first housing and the second housing are connected by using heat sealing to form the accommodating member 10. The first part 31 of the metal strip 30 extends from a top of the accommodating member 10, and the second part 32 is provided between the first housing and the second housing. In addition, the second part 32 is connected between the first housing and the second housing by using the sealing colloid 40. Connection between the part 32 and the accommodating member 10 can be implemented in many forms, which are not limited herein. The third part 33 is located inside the accommodating cavity 11 of the accommodating member 10, and the third part 33 is electrically connected to the electrode assembly 20 in manners including but not limited to laser welding and conductive adhesive connection.

For the foregoing sealing colloid 40, referring to FIG. 1, FIG. 3, and FIG. 4, the sealing colloid 40 is connected to the metal strip 30 and the accommodating member 10, and the sealing colloid 40 may be an adhesive layer formed after the sealing colloid 40 fuses with the accommodating member 10. When the accommodating member 10 and the sealing colloid 40 are hot pressed, the metal strip 30 extends from the accommodating member 10, and the sealing colloid 40 is sealed between the metal strip 30 and the accommodating member 10, so that the accommodating cavity 11 is sealed. The sealing colloid 40 includes a sealed portion 41 and an inner unsealed portion 42 connected to each other. The sealed portion 41 is connected between the accommodating member 10 and the second part 32 of the metal strip 30. In addition, the sealed part 41 is configured as a gap between the accommodating member 10 and the metal strip 30, and the sealed portion 41 and the accommodating member 10 form a sealing portion of the electrochemical apparatus 100 (not shown in the figure). Positions of the sealed portion 41, the accommodating member 10, and the metal strip 30 can be adjusted, so that the encapsulation strength is 15N or above, thereby ensuring basic sealing capability of the sealing portion. The inner unsealed portion 42 is connected to one end of the sealed portion 41 facing the accommodating cavity. The inner unsealed portion 42 may partially abut against an inner wall of the accommodating member 10 to further improve sealing performance of the sealing portion. In addition, the inner unsealed portion 42 can reduce direct contact between the metal strip 30 and the accommodating member 10 to reduce the risk of short circuit.

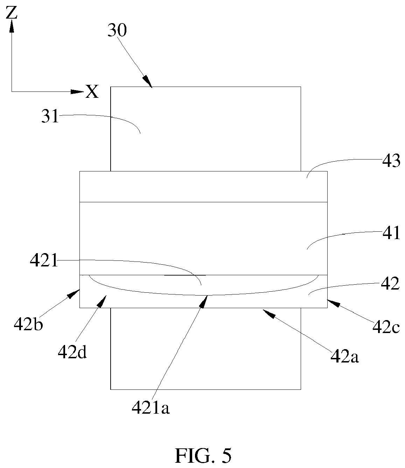

Referring to FIG. 1 and FIG. 5, at least one surface of the inner unsealed portion 42 is provided with one first groove 421. A lower end face (a first wall surface 42a), a left surface (a second wall surface 42b), a right surface (a third wall surface 42c), and front end face 42d (that is, a surface of the inner unsealed portion 42 facing away from the metal strip 30) of the inner unsealed portion 42 may all be provided with the first groove 421. When hot pressing is performed on the accommodating member 10 and the sealing colloid 40 to seal an edge of the metal strip 30 extending out of the electrochemical apparatus 100, so that a sealing portion is formed. A molten sealing colloid 40 flowing towards the accommodating cavity 11 in the hot pressing process is accommodated in the first groove 421. In this way, an overflow of the sealing colloid formed in the accommodating cavity 11 can be effectively reduced, thereby alleviating a safety risk caused by interference of the overflow of the sealing colloid 40 on the electrode assembly 20. It may be understood that the first groove 421 may alternatively be provided on a surface of the metal strip 30 facing the sealing colloid 40. In this case, the first groove 421 can also collect partially molten sealing colloid 40.

The first groove 421 may be in any shape provided that the foregoing overflow of the sealing colloid can be collected. For example, the first groove 421 may be in a hemispherical, semi-rhombic, or semi-elliptical shape. A cross-sectional area of a bottom 421a of the first groove (one end of the first groove near the electrode assembly 20) is small (a cross-section of the first groove in a first direction X), thereby helping the sealing colloid 40 in a molten state enter the first groove 421 from top to bottom when the sealing colloid 40 melts. The first groove 421 may be provided after the sealing colloid 40 is cast by using a mold and cooled, or the first groove 421 may be cut on the sealing colloid 40 by using a laser cutting method.

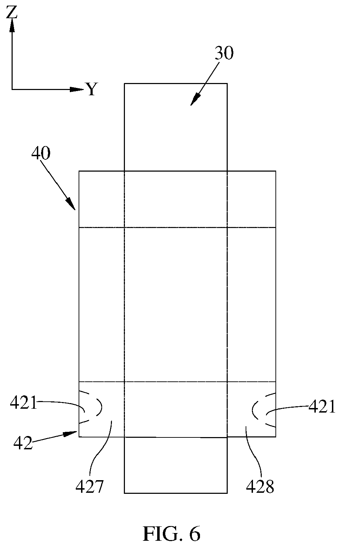

Optionally, on a surface of the inner unsealed portion 42, an area of the first groove 421 accounts for 10% to 80% of a surface area of the inner unsealed portion 42. If the area of the first groove 421 on the surface of the inner unsealed portion 42 is larger, it is easier to collect the molten sealing colloid 40. According to a specific requirement, an appropriate area ratio can be selected. In this embodiment, when the area ratio is 10% to 80%, the sealing colloid 40 in a molten state can be effectively collected. Optionally, referring to FIG. 6, the maximum depth of the first groove 421 may be 1/4 to 1/3 of a thickness of the sealing colloid 40. A depth of the first groove 421 means a depth of the first groove 421 in a second direction Y, and the thickness of the sealing colloid 40 means a thickness of the sealing colloid 40 in the second direction Y. If the depth of the first groove 421 is greater, more sealing colloid 40 in a molten state can be collected. However, if the depth is greater, the strength of the sealing colloid 40 is lower, which is not conducive to sealing performance of the sealing colloid 40. According to an actual requirement, an appropriate depth ratio can be selected. In this embodiment, the depth of the first groove 421 is 1/4 to 1/3 of the thickness of the sealing colloid 40, so that enough molten sealing colloid 40 can be effectively collected and the sealing colloid 40 has sufficient strength.

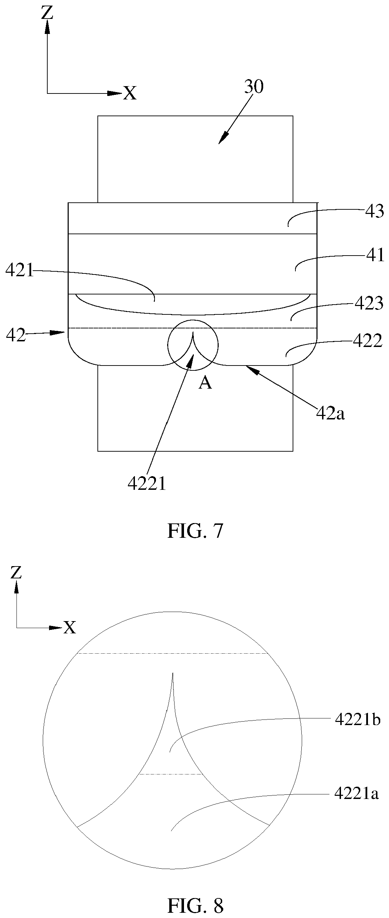

In some embodiments, referring to FIG. 1 and FIG. 7, the inner unsealed portion 42 further includes an inner exposed portion 422. The inner exposed portion 422 is located at one end of the inner unsealed portion 42 facing away from the sealed portion 41. The inner exposed portion 422 is provided with at least one second groove 4221. The second groove 4221 is in communication with the accommodating cavity 11 and extends in a direction towards the sealed portion 41. For example, the inner exposed portion 422 is located in a lower half section of the inner unsealed portion 42 (not shown in the figure). The first groove 421 is provided in an upper half section 423 of the inner unsealed portion 42. The second groove 4221 is provided in a lower end face (a first wall surface 42a) of the inner exposed portion 422. An opening of the second groove 4221 faces the accommodating cavity 11. It may be understood that the first groove 421 can alternatively extend from the upper half section 423 of the inner unsealed portion 42 to the inner exposed portion 422, or the first groove 421 may be directly provided on the inner exposed portion 422, provided that the first groove 421 can collect the sealing colloid 40 in a molten state. In this embodiment, the second groove 4221 is provided. When a hot-box test is performed on the electrochemical apparatus 100 or thermal runaway occurs, the gas being heated in the accommodating cavity 11 expands. Some of the gas converges in the second groove 4221 and impacts the sealing portion in a concentrated manner in the second groove 4221, so that the sealing portion can be flushed away and the gas in the accommodating cavity 11 can be discharged, thereby preventing explosion of the electrochemical apparatus 100.

Optionally, referring to FIG. 1, FIG. 7, and FIG. 8, in a direction from the inner exposed portion 422 to the sealed portion 41 (a third direction Z), the second groove 4221 includes a first section 4221a and a second section 4221b in communication with each other. A cross-sectional area of the first section 4221a (a cross-section in the first direction X) is greater than that of the second section 4221b. The first section 4221a faces the accommodating cavity 11 while the second section 4221b extends towards the sealed portion 41. In this embodiment, the cross-sectional area of the first section 4221a is greater than that of the second section 4221b, thereby helping more gas enter the second groove 4221 through the first section 4221a. In addition, the cross-sectional area of the second section 4221b is small, so that the gas has a greater pressure when collectively impacting the second section 4221b, thereby helping the gas flush away the sealing portion.

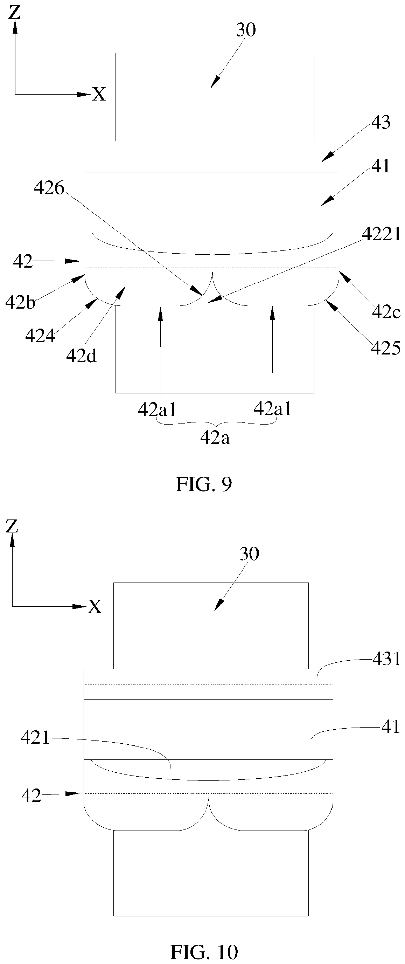

In some embodiments, referring to FIG. 1 and FIG. 9, the inner unsealed portion 42 includes a first wall surface 42a, a second wall surface 42b, and a third wall surface 42c connected to each other. In a direction from the sealed portion 41 to the inner unsealed portion 42, the first wall surface 42a faces the accommodating cavity 11. In the first direction X, the second wall surface 42b and the third wall surface 42c are respectively provided at two ends of the first wall surface 42a. The first direction X is perpendicular to a direction from the inner unsealed portion 42 to the sealed portion 41, and the first direction X is perpendicular to a thickness direction of the metal strip 30. A first chamfer portion 424 is provided at the connection between the first wall surface 42a and the second wall surface 42b, the first chamfer portion 424 is smoothly connected to the first wall surface 42a and the second wall surface 42b, and an outer surface of the first chamfer portion 424 is an arc surface. When the electrochemical apparatus 100 drops, the electrode assembly 20 in the accommodating member 10 is likely to move and directly come into contact with the first chamfer portion 424. In this embodiment, because an outer surface of the first chamfer portion 424 is an arc surface, the arc surface comes into contact with the electrode assembly 20 in a smoother manner and is unlikely to puncture the electrode assembly 20, which can effectively alleviate interference between the first chamfer portion 424 and the electrode assembly 20. Based on the same inventive concept, a second chamfer portion 425 is provided at the connection between the first wall surface 42a and the third wall surface 42c. An outer surface of the second chamfer portion 425 is an arc surface, which reduces a possibility that the second chamfer portion 425 punctures the electrode assembly 20.

Optionally, in some embodiments, referring to FIG. 1 and FIG. 9, in the first direction X, the first wall surface 42a includes several first sub wall surfaces 42a1 provided in sequence, and the second groove 4221 is provided between two adjacent first sub wall surfaces 42a1. A third chamfer portion 426 is provided at the connection between an inner wall of the second groove 4221 and the first sub wall surface 42a1, and an outer surface of the third chamfer portion 426 is an arc surface. In this embodiment, to help the gas impact the sealing portion in a concentrated manner in the accommodating cavity 11, the first sub wall surfaces 42a1 all face the electrode assembly 20. When the electrochemical apparatus 100 drops, the electrode assembly 20 may also be punctured at the connection between an inner wall of the second groove 4221 and the first sub wall surface 42a1. Therefore, in this embodiment, this connection position is provided with the third chamfer portion 426 whose outer surface is an arc surface. The third chamfer portion 426 and the first sub wall surface 42a1 are smoothly connected to the inner wall of the second groove 4221, which can reduce interference between the third chamfer portion 426 and the electrode assembly 20, thereby reducing the risk of the electrode assembly 20 being punctured. Diameters of the first chamfer portion 424, the second chamfer portion 425, and the third chamfer portion 426 may be greater than or equal to 1.8 ± 0.3 mm to ensure that each chamfer portion can enter the inner unsealed portion 42 in a great depth.

Optionally, the inner unsealed portion 42 further includes a front end face 42d. The front end face 42d is provided facing away from the metal strip 30. The front end face 42d is connected to the first wall surface 42a, the second wall surface 42b, and the third wall surface 42c separately. The first chamfer portion 424, the second chamfer portion 425, and the third chamfer portion 426 are all smoothly connected to the front end face 42d, so that connection positions of each surface of the inner unsealed portion 42 near the electrode assembly 20 are all arc surfaces, thereby alleviating interference between the inner unsealed portion 42 and the electrode assembly 20.

In some embodiments, referring to FIG. 1 and FIG. 9, the sealing colloid 40 further includes an outer unsealed portion 43. The outer unsealed portion 43 is connected to one end of the sealed portion 41 facing away from the inner unsealed portion 42. The outer unsealed portion 43 at least partially extends out of the accommodating member 10. The outer unsealed portion 43 extends out of the accommodating member 10 and then may be partially connected to an outer surface of the accommodating member 10 to ensure sealing of the accommodating member 10. In addition, the outer unsealed portion 43 can reduce contact between the metal strip 30 and a surface of the accommodating member 10, thereby reducing the risk of short circuit. Optionally, the outer unsealed portion 43, the sealed portion 41, and the inner unsealed portion 42 are integrally formed, which ensures that the sealing colloid 40 has sufficient strength to stably connect the metal strip 30 and the accommodating member 10.

Optionally, further referring to FIG. 10, the outer unsealed portion 43 further includes an outer exposed portion 431. The outer exposed portion 431 is connected to one end of the outer unsealed portion 43 facing away from the sealed portion 41, and the outer exposed portion 431 is exposed outside the accommodating member 10. In some embodiments, in the third direction Z, a length of the outer exposed portion 431 is 0.2 to 1.5 millimeters, and a length of the inner exposed portion 422 is 0.2 to 1.5 millimeters. A length of a rest portion of the sealing colloid 40 (that is, the rest portion is a portion of the sealing colloid 40 other then the outer exposed part 431 and the inner exposed portion 422) is 1.2 to 3 millimeters.

According to some embodiments of this application, referring to FIG. 1 and FIG. 6, the sealing colloid 40 fits around and is installed on the metal strip 30. During assembly, the sealing colloid 40 connects the metal strip 30 to the accommodating member 10. For example, the sealing colloid 40 fits around the metal strip 30 and the sealing colloid 40 is fixed on the metal strip 30 by welding. The inner unsealed portion 42 includes a first inner unsealed portion 427 and a second inner unsealed portion 428. The first inner unsealed portion 427 and the second inner unsealed portion 428 are respectively provided on two sides of the metal strip 30. In a thickness direction (the second direction Y) of the metal strip 30, the first inner unsealed portion 427 is provided opposite the second inner unsealed portion 428. The first inner unsealed portion 427 is provided with at least one first groove 421, and/or the second inner unsealed portion 428 is provided with at least one first groove 421. The two inner unsealed portions (the first inner unsealed portion 427 and the second inner unsealed portion 428) are both provided with the first groove 421 to collect more sealing colloids 40 in a molten state, thereby further reducing the overflow of the sealing colloids 40 in a molten state after leakage.

Optionally, the inner exposed portion 422 includes a first inner exposed portion (not shown in the figure) and a second inner exposed portion (not shown in the figure). The first inner exposed portion and the second inner exposed portion are respectively provided on the two sides of the metal strip 30. In the thickness direction of the metal strip 30, the first inner exposed portion is provided opposite the second inner exposed portion. The first inner exposed portion is provided with at least one second groove 4221, and/or the second inner exposed portion is provided with at least one second groove 4221. The two inner exposed portions may be both provided with the second groove 4221 to help the gas accommodated in the accommodating cavity 11 impact the sealing portion from a plurality of positions, thereby reducing the risk of explosion in the electrochemical apparatus 100.

In this embodiment of this application, at least one first groove 421 is provided on at least one surface of the inner unsealed portion 42, so that when hot pressing is performed on the accommodating member 10 and the sealing colloid 40 to seal an extending edge of the metal strip 30 (that is, when the sealing portion is formed), a molten sealing colloid 40 flowing towards the accommodating cavity 11 in the hot pressing process is accommodated in the first groove 421. In this way, an overflow of the sealing colloid formed in the accommodating cavity 11 can be effectively reduced, thereby alleviating a safety risk caused by interference of the overflow of the sealing colloid 40 on the electrode assembly 20. In addition, the inner exposed portion 422 is provided with at least one second groove 4221. When a hot-box test is performed on the electrochemical apparatus 100 or thermal runaway occurs, the gas being heated in the accommodating cavity 11 expands. Some of the gas converges in the second groove 4221 and impacts the sealing portion in a concentrated manner in the second groove 4221, so that the sealing portion can be flushed away and the gas in the accommodating cavity 11 can be discharged, thereby preventing explosion of the electrochemical apparatus 100.

According to a second aspect, an embodiment of this application further proposes an electronic device, including the electrochemical apparatus 100 according to any one of the foregoing embodiments. The electronic device according to the embodiments of this application is not particularly limited, and may be any known electronic device used in the prior art. For example, the electronic device includes but is not limited to a Bluetooth earphone, a mobile phone, a tablet personal computer, a laptop computer, an electric toy, an electric tool, an electric bicycle, an electric car, a ship, a spacecraft, and the like. The electric toy may include a fixed or mobile electric toy, for example, a game console, an electric toy car, an electric toy ship, an electric toy aircraft, and the like. The spacecraft may include an aircraft, a rocket, a space shuttle, a spaceship, and the like.

It should be noted that the specification and accompanying drawings of this application provide preferred embodiments of this application. However, this application may be implemented in many different manners, and is not limited to the embodiments described in the specification. These embodiments are not intended as additional limitations on the content of this application. These embodiments are provided in order to clearly and completely describe this application, and to fully convey the scope of this application to persons skilled in the art. In addition, the foregoing technical features continue to be combined to form various embodiments not listed above, which are considered within the scope of the specification of this application. Further, persons of ordinary skill in the art can make improvements or transformations according to the above description, and all these improvements and transformations should fall within the protection scope of the claims of this application.

## Claims

1. An electrochemical apparatus (100), comprising an accommodating member (10), an electrode assembly (20), a metal strip (30) and a sealing colloid (40);
wherein the accommodating member (10) encloses an accommodating cavity (11) for accommodating the electrode assembly (20);
the metal strip (30) comprises a first part (21), a second part (32), and a third part (33) connected in sequence; and the first part (21) extends out of the accommodating member (10), the second part (32) is provided with the sealing colloid (40), and the third part (33) is located inside the accommodating cavity (11) and electrically connected to the electrode assembly (20);
the sealing colloid (40) comprises a sealed portion (41) and an inner unsealed portion (42) connected to each other; the sealed portion (41) is connected between the accommodating member (10) and the second part (32), and the sealed portion (41) and the accommodating member (10) form a sealing portion of the electrochemical apparatus (100); and the inner unsealed portion (42) is provided in the accommodating cavity (11), the inner unsealed portion (42) is provided with at least one first groove (421) and at least one second groove (4221), and the at least one second groove (4221) is in communication with the accommodating cavity (11).

2. The electrochemical apparatus (100) according to claim 1, wherein the inner unsealed portion (42) further comprises an inner exposed portion (422), the inner exposed portion (422) is located at one end of the inner unsealed portion (42) facing away from the sealed portion (41), the at least one second groove (4221) is provided on the inner exposed portion (422), and the at least one second groove (4221) extends in a direction towards the sealed portion (41).

3. The electrochemical apparatus (100) according to claim 2, wherein in a direction from the inner exposed portion (422) to the sealed portion (41), the at least one second groove (4221) comprises a first section (4221a) and a second section (4221b) in communication with each other; and a cross-sectional area of the first section (4221a) in a first direction is greater than that of the second section (4221b) in the first direction; and
the first direction (4221a) is perpendicular to the direction from the inner exposed portion (422) to the sealed portion (41).

4. The electrochemical apparatus (100) according to claim 2, wherein the inner unsealed portion (42) comprises a first wall surface (42a), a second wall surface (42b), a third wall surface (42c), a first chamfer portion (424), and a second chamfer portion (425);
in a direction from the sealed portion (41) to the inner unsealed portion (42), the first wall surface (42a) faces the accommodating cavity (11);
in the first direction, the second wall surface (42b) and the third wall surface (42c) are respectively provided at two ends of the first wall surface (42a); wherein the first direction is perpendicular to a direction from the inner unsealed portion (42) to the sealed portion (41), and the first direction is perpendicular to a thickness direction of the metal strip (30);
the first chamfer portion (424) is provided between the first wall surface (42a) and the second wall surface (42b), and an outer surface of the first chamfer portion (424) is an arc surface; and
the second chamfer portion (425) is provided between the first wall surface (42a) and the third wall surface (42c), and an outer surface of the second chamfer portion (425) is an arc surface.

5. The electrochemical apparatus (100) according to claim 4, wherein in the first direction, the first wall surface (42a) comprises a plurality of first sub wall surfaces (42a1) provided in sequence, and the at least one second groove (4221) is provided between two adjacent first sub wall surfaces (42a1); and
the inner unsealed portion (42) further comprises a third chamfer portion (426), the third chamfer portion (426) is provided between an inner wall of the at least one second groove (4221) and the first sub wall surface (42a1), and an outer surface of the third chamfer portion (426) is an arc surface.

6. The electrochemical apparatus (100) according to claim 2, wherein the sealed portion (41) is integrally formed with the inner unsealed portion (42).

7. The electrochemical apparatus (100) according to claim 1, wherein the at least one first groove (421) satisfies at least one of the following conditions:
(a) on a surface of the inner unsealed portion (42), an area of the at least one first groove (421) accounts for 10% to 80% of a surface area of the inner unsealed portion (42); or
(b) a depth of the at least one first groove (421) is 1/4 to 1/3 of a thickness of the sealing colloid (40).

8. The electrochemical apparatus (100) according to claim 2, wherein the sealing colloid (40) fits around the metal strip (30), and the sealing colloid (40) is connected between the metal strip (30) and the accommodating member (10);
the inner unsealed portion (42) comprises a first inner unsealed portion (427) and a second inner unsealed portion (428); and in a thickness direction of the metal strip (30), the first inner unsealed portion (427) is provided opposite to the second inner unsealed portion (428); and
the first inner unsealed portion (427) is provided with the at least one first groove (421), and/or the second inner unsealed portion (428) is provided with the at least one first groove (421).

9. The electrochemical apparatus (100) according to claim 8, wherein the inner exposed portion (422) comprises a first inner exposed portion and a second inner exposed portion; and in the thickness direction of the metal strip (30), the first inner exposed portion is provided opposite to the second exposed portion; and
the first inner exposed portion is provided with the at least one second groove (4221), and/or the second inner exposed portion is provided with the at least one second groove (4221).

10. An electronic device, comprising the electrochemical apparatus (100) according to any one of claims 1 to 9.
